# EUROPEAN PATENT SPECIFICATION

(11) **EP 3 018 170 B1**
(45) Date of publication and mention of the grant of the patent: **01.03.2017**
(21) Application number: 15192339.8
(22) Date of filing: 30.10.2015
(51) Int. Cl.: C08L 1/28

(54) **READILY THERMALLY DEGRADABLE ORGANIC RESIN BINDER**
THERMISCH LEICHT ABBAUBARES, ORGANISCHES HARZBINDEMITTEL
LIANT DE RÉSINE ORGANIQUE FACILEMENT THERMO-DÉGRADABLE

(30) Priority: 07.11.2014 JP 2014226620
(43) Date of publication of application: 11.05.2016
(73) Proprietor: Kusumoto Chemicals, Ltd., Tokyo 101-0047 (JP)
(72) Inventor: SHIMIZU, Daisuke, Soka-shi, Saitama 340-0004 (JP); ASANO, Kenichi, Soka-shi, Saitama 340-0004 (JP); MATSUMOTO, Takuro, Soka-shi, Saitama 340-0004 (JP)
(74) Representative: Adam, Holger

(56) References cited:
- WO-A1-2011/016442
- JP-A- 2007 169 446
- JP-A- 2009 173 811

## Description

### [Technical Field]

The present invention relates to a readily thermally degradable organic resin binder and to a high-concentration inorganic microparticle dispersion prepared using same, the high-concentration inorganic microparticle dispersion being exemplified by electroconductive pastes, metal inks, ceramic pastes, and glass pastes.

More particularly, the present invention relates to a readily thermally degradable organic resin binder that can, when used as a binder component in a high-concentration inorganic microparticle dispersion that is printed or coated on various components, reduce the problem of the production of carbon residue in the firing step without impairing the printing or coating step. The present invention also relates to a high-concentration inorganic microparticle dispersion that contains this readily thermally degradable organic resin binder as a binder component.

### [Background Art]

Within the field of electronic components, high-concentration inorganic microparticle dispersions are employed as printing inks and coating materials for use in the production processes for, e.g., electronic circuits, electrodes, photovoltaic cell panels, microstrip antennas, capacitors, inductors, layered ceramic capacitors, plasma display panels, and so forth.

When used in a printing step or coating step in the production of electronic components, a high-concentration inorganic microparticle dispersion enables a fine and precise control of electronic component fabrication and as a consequence is utilized industrially as a method that contributes to enhancing the properties of electronic components and to facilitating the mass production of electronic components.

In a method generally used in the production of precision-fabricated components as typified by electronic components, the high-concentration inorganic microparticle dispersion is printed or coated using a printer or coater following by firing. For example, a circuit pattern can be readily formed on a substrate by printing a circuit by a screen printing method using an electroconductive paint in which metal microparticles are dispersed; drying; and then firing. In addition, a protective layer or an insulating layer can be readily formed over a large area by application with a coater using a paint in which metal oxide particles are dispersed; drying; and then firing.

Ethyl cellulose resin came to be generally used as the organic resin binder when high-concentration inorganic microparticle dispersions were used in a printing step or coating step. However, ethyl cellulose resin has a poor thermal degradability (high thermal degradation temperature), and as a result it readily leaves behind carbon residues at low firing temperatures, which has resulted in a reduction in the electrical properties of the printed layer or coating layer.

In view of the current demand for improvements in production efficiency and energy efficiency, there is demand for a lowering of the temperature in the firing step and a shortening of the time required for the firing step. Moreover, lower weights and smaller sizes as brought about by advances in production technology are being required of components and substrates are being made thinner and are being converted to plastic, and as a consequence even lower temperatures and shorter times are being sought for the firing step.

Improvements to these problems have been pursued through the use of (meth)acrylic resin, polyoxyalkylene resin, and so forth, which have excellent low-temperature degradabilities, as the organic resin binder in place of ethyl cellulose resin. However, because defects during printing can still be produced with this art, it does not provide a complete solution to these problems.

A (meth)acrylic resin is used as the organic resin binder in order to lower the firing residue in the inventions described in Patent Literature 1, 2, and 3, infra. However, (meth)acrylic resin binders have a strong spinnability or stringiness, which causes the problem of disordered printed end regions. In addition, (meth)acrylic resin binders have a lower viscosity than ethyl cellulose resin binders, which causes the problem of a low aspect ratio for the pattern. This aspect ratio denotes the ratio of the height to the width of the circuit pattern. For example, in the case of photovoltaic cells, the electrode preferably has a narrower width and a higher height in order to broaden the light-receiving area. Such a state is referred to as a high aspect ratio.

### [Citation List]

### [Patent Literature]

Patent Literature 1: JP 2013-235678 A
Patent Literature 2: JP 3632868 B
Patent Literature 3: JP 4573696 B

### [Disclosure of the Invention]

### [Problems to be Solved by the Invention]

An object of the present invention is to provide a readily thermally degradable organic resin binder that, in comparison to the ethyl cellulose resin generally used as an organic resin binder for high-concentration inorganic microparticle dispersions, enables firing to be carried out at a lower temperature and supports a greater suppression of carbon residue production, while maintaining the printing characteristics. An additional object of the present invention is to provide a high-concentration inorganic microparticle dispersion that incorporates such an organic resin binder.

### [Means for Solving the Problem]

As a result of intensive investigations, the present inventors discovered that a readily thermally degradable organic resin binder that can achieve the aforementioned objects is obtained by mixing a (meth)acrylic resin given by general formula (1) below with an ethyl cellulose resin so as to provide a weight ratio between (meth)acrylic resin and ethyl cellulose resin of 5 : 95 to 50 : 50.

The present inventors infer the following, without meaning that the functional mechanism for the readily thermally degradable organic resin binder of the present invention is clear: the (meth)acrylic resin and the ethyl cellulose resin assume a microphase-separated state in a high-concentration inorganic microparticle dispersion containing inorganic microparticles and the readily thermally degradable organic resin binder of the present invention, and optionally containing an organic solvent and additive. In the firing step, the microphase-separated structure collapses when the highly thermally degradable (meth)acrylic resin starts to degrade and the degradation of the ethyl cellulose resin is promoted, and as a result the thermal degradability is improved over that of an organic resin binder composed of only ethyl cellulose resin.

Due to the formation of such a microphase-separated structure, the structural viscosity of the ethyl cellulose resin is suppressed and the stringiness of the (meth)acrylic resin is inhibited, and because of this the leveling behavior is improved and the surface smoothness and the accuracy in screen printing can be improved.

### [Advantageous Effect of the Invention]

The high-concentration inorganic microparticle dispersion containing the readily thermally degradable organic resin binder of the present invention as a binder component can reduce the appearance of problems, such as the reduction in the electroconductive characteristics or the reduction in component strength, that are caused by a deficient degreasing or the production of a carbon fraction in the step of firing after this dispersion has been printed or coated on any of various components. As a secondary effect, by mixing the ethyl cellulose resin and (meth)acrylic resin in the appropriate weight proportions, the stringiness caused by the properties of the (meth)acrylic resin can be suppressed and reductions in the printing accuracy can then be prevented.

### [Mode for Carrying out the Invention]

The readily thermally degradable organic resin binder and high-concentration inorganic microparticle dispersion of the present invention are described in detail in the following.

### 1. The readily thermally degradable organic resin

The readily thermally degradable organic resin binder of the present invention is obtained by mixing a prescribed (meth)acrylic resin and an ethyl cellulose resin so as to provide a weight ratio between (meth)acrylic resin and ethyl cellulose resin of 5 : 95 to 50 : 50, and has the ability to lower the amount of carbon residue production during the firing step from that for an ethyl cellulose resin binder.

The (meth)acrylic resin used by the present invention is an acrylic polymer having a monomer unit given by the following general formula (1) 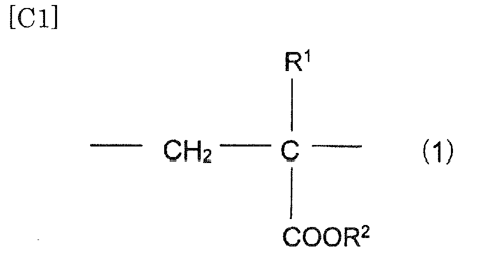 [in the formula, R¹ represents hydrogen or a methyl group and R² represents hydrogen or a C₁-₁₂ and particularly a C₁-₄ straight-chain hydrocarbon group, branched-chain hydrocarbon group or hydroxyl group-bearing hydrocarbon group, or a polyalkylene oxide-containing group]. More particularly, R1 is hydrogen or a methyl group and R2 is a C1-4 alkyl group, a 2-ethylhexyl group, a lauryl group, a hydroxyethyl group, or a methoxy polyethylene glycol group.

The monomer constituting the (meth)acrylic resin can be exemplified by (meth)acrylic acid; the alkyl esters of (meth)acrylic acid, such as methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, tert-butyl (meth)acrylate, n-pentyl (meth)acrylate, isopentyl (meth)acrylate, neopentyl (meth)acrylate, tert-pentyl (meth)acrylate, n-hexyl (meth)acrylate, isohexyl (meth)acrylate, n-octyl (meth)acrylate, tert-octyl (meth)acrylate, 2-ethylhexyl (meth)acrylate, and lauryl (meth)acrylate; the hydroxyalkyl esters of (meth)acrylic acid, such as hydroxyethyl (meth)acrylate; the polyalkylene glycol esters of (meth)acrylic acid, such as the polyethylene glycol esters of (meth)acrylic acid and the polypropylene glycol esters of (meth)acrylic acid; polyalkylene glycol (meth)acrylates such as polyethylene glycol (meth)acrylate, polypropylene glycol (meth)acrylate, and alkoxy polyalkylene glycol (meth)acrylates such as methoxy polyethylene glycol (meth)acrylate, methoxy polypropylene glycol (meth)acrylate. These may be used individually or in combination.

The weight-average molecular weight of this (meth)acrylic resin is 1,000 to 250,000 and preferably 2,000 to 200,000. When the weight-average molecular weight of the (meth)acrylic resin is less than 1,000, a viscosity adequate for screen printing and adherence to the printed substrate are not obtained, and the accuracy of the circuit pattern may then decline. When the weight-average molecular weight of the (meth)acrylic resin exceeds 250,000, the compatibility with the ethyl cellulose resin then worsens and the thermal degradation-promoting action that is a goal of the present invention is not obtained to an adequate degree.

The (meth)acrylic resin is preferably obtained by a solution polymerization method. A (meth)acrylic resin obtained by an emulsion polymerization method is disfavored because the electrical characteristics can be impaired by the alkali metal component originating with the emulsifying agent used and because a decline in the adherence to substrate can occur due to the interfacial orientation of the emulsifying agent component.

The ethyl cellulose resin used by the present invention is an ethylated derivative of cellulose and is commercially available in a variety of grades. Examples here are STD-4, STD-7, STD-10, STD-20, STD-45, and STD-100 from The Dow Chemical Company. The ethyl cellulose resin for the present invention, however, is not limited to these product numbers.

With the goal of facilitating blending to give the high-concentration inorganic microparticle dispersion, the readily thermally degradable organic resin binder of the present invention may as necessary contain an organic solvent. The organic solvent used can be exemplified by aliphatic hydrocarbons, alicyclic hydrocarbons, aromatic hydrocarbons, ketones, esters, alcohols, ethers, polyglycols, terpenes, and so forth. A solvent adapted to the system used is desirably selected.

The organic solvent can be specifically exemplified by methyl alcohol, ethyl alcohol, normal-propyl alcohol, isopropyl alcohol, normal-butyl alcohol, isobutyl alcohol, pentyl alcohol, hexyl alcohol, heptyl alcohol, octyl alcohol, 2-ethylhexyl alcohol, ethylene glycol monomethyl ether, diethylene glycol monomethyl ether, triethylene glycol monomethyl ether, ethylene glycol monoisopropyl ether, diethylene glycol monoisopropyl ether, triethylene glycol monoisopropyl ether, ethylene glycol monobutyl ether, diethylene glycol monobutyl ether, triethylene glycol monobutyl ether, propylene glycol monomethyl ether, dipropylene glycol monomethyl ether, 2,2,4-trimethyl-1,3-pentanediol monoisobutyrate, ethyl acetate, normal-propyl acetate, isopropyl acetate, normal-butyl acetate, isobutyl acetate, hexyl acetate, ethylene glycol monomethyl ether acetate, diethylene glycol monomethyl ether acetate, triethylene glycol monomethyl ether acetate, ethylene glycol monoisopropyl ether acetate, diethylene glycol monoisopropyl ether acetate, triethylene glycol monoisopropyl ether acetate, ethylene glycol monobutyl ether acetate, diethylene glycol monobutyl ether acetate, triethylene glycol monobutyl ether acetate, propylene glycol monomethyl ether acetate, dipropylene glycol monomethyl ether acetate, nonane, normal-decane, isodecane, normal-dodecane, isododecane, methylcyclohexane, dimethylcyclohexane, ethylcyclohexane, toluene, xylene, terpineol, dihydroterpineol, and dihydroterpineol acetate. A single one of these may be used by itself or a combination may be used.

### 2. The high-concentration inorganic microparticle dispersion

The high-concentration inorganic microparticle dispersion of the present invention has inorganic microparticles and the readily thermally degradable organic resin binder as essential components and has organic solvent and other additives as optional components, and each of the components is desirably specifically selected in conformity to the use application.

The inorganic microparticles can be exemplified by microparticles of gold, silver, copper, aluminum, nickel, cobalt, tin, zinc, lead, tungsten, carbon, rare-earth metals, alloys of these metals, alumina, silica, zirconia, yttria, ferrite, zinc oxide, titanium oxide, barium titanate, lead titanate zirconate, boron oxide, boron nitride, silicon nitride, silicon carbide, tungsten carbide, and so forth, that have the particle diameters customary for application in electroconductive pastes, printing inks, and paints. A single one of these may be used by itself or a combination may be used, but the inorganic microparticle must be selected in conformity to the use application. The preferred microparticles in the inorganic microparticle dispersion according to claim 4, are silver microparticles.

The content of the inorganic microparticles in the high-concentration inorganic microparticle dispersion of the present invention is not particularly limited, but a preferred lower limit is 30 weight% and a preferred upper limit is 95 weight%. When the inorganic microparticle content is less than 30 weight%, the obtained dispersion does not have an adequate viscosity and the printability and coatability may be diminished. When the inorganic microparticle content exceeds 95 weight%, the viscosity of the obtained dispersion is then too high and the printability and coatability may worsen.

The content of the readily thermally degradable organic resin binder in the high-concentration inorganic microparticle dispersion of the present invention is not particularly limited, but a preferred lower limit is 0.5 weight% and a preferred upper limit is 30 weight%. When the resin binder content is less than 0.5 weight%, the obtained dispersion does not have an adequate viscosity and as a consequence the storage stability may worsen and sedimentation of the inorganic microparticles may occur. When the resin binder content exceeds 30 weight%, the amount of production of organic residue increases and the electrical properties and mechanical properties after the firing step may then be reduced.

In addition to the inorganic microparticles and readily thermally degradable organic resin binder, the high-concentration dispersion of the present invention may contain an organic solvent with the goal of adjusting the viscosity of the inorganic microparticle dispersion. This organic solvent can be exemplified by methyl alcohol, ethyl alcohol, normal-propyl alcohol, isopropyl alcohol, normal-butyl alcohol, isobutyl alcohol, pentyl alcohol, hexyl alcohol, heptyl alcohol, octyl alcohol, 2-ethylhexyl alcohol, ethylene glycol monomethyl ether, diethylene glycol monomethyl ether, triethylene glycol monomethyl ether, ethylene glycol monoisopropyl ether, diethylene glycol monoisopropyl ether, triethylene glycol monoisopropyl ether, ethylene glycol monobutyl ether, diethylene glycol butyl ether, triethylene glycol monobutyl ether, propylene glycol monomethyl ether, dipropylene glycol monomethyl ether, 2,2,4-trimethyl-1,3-pentanediol monoisobutyrate, ethyl acetate, normal-propyl acetate, isopropyl acetate, normal-butyl acetate, isobutyl acetate, hexyl acetate, ethylene glycol monomethyl ether acetate, diethylene glycol monomethyl ether acetate, triethylene glycol monomethyl ether acetate, ethylene glycol monoisopropyl ether acetate, diethylene glycol monoisopropyl ether acetate, triethylene glycol monoisopropyl ether acetate, ethylene glycol monobutyl ether acetate, diethylene glycol monobutyl ether acetate, triethylene glycol monobutyl ether acetate, propylene glycol monomethyl ether acetate, dipropylene glycol monomethyl ether acetate, nonane, normal-decane, isodecane, normal-dodecane, isododecane, methylcyclohexane, dimethylcyclohexane, ethylcyclohexane, toluene, xylene, terpineol, dihydroterpineol, and dihydroterpineol acetate. A single one of these may be used by itself or a combination may be used, but the type of organic solvent and its amount of incorporation are desirably established in conformity with the use application.

There are no particular limitations on the content of the organic solvent used, but a preferred range is 0 to 70 weight% with reference to the weight of the high-concentration inorganic microparticle dispersion. When the content of the organic solvent exceeds 70 weight%, an adequate viscosity is not obtained for the resulting dispersion and the printability and coatability may then deteriorate.

In addition to the inorganic microparticles and the readily thermally degradable organic resin binder that are its essential components, the high-concentration inorganic microparticle dispersion of the present invention may also contain a dispersing agent with the goal of facilitating the dispersion of the inorganic microparticles. There are no particular limitations on the dispersing agent as long as it has the ability to disperse the inorganic microparticles in the medium, and commercially available dispersing agents can be used, such as an amine compound such as octylamine, hexylamine, or oleylamine; a sulfur compound such as dodecanethiol; a carboxylic acid compound such as oleic acid; a branched polymer compound bearing the ammonium group; a dithiocarbamate group-bearing low molecular weight compound or high molecular weight compound; a dendrimer or hyperbranched polymer; a hyperbranched polymer having the ammonium group at the molecular terminals; a phosphate ester-type dispersing agent; or a polyethyleneimine graft polymer-type dispersing agent. A single dispersing agent may be used by itself or two or more may be used in combination.

In addition to the inorganic microparticles and the readily thermally degradable organic resin binder, the high-concentration inorganic microparticle dispersion of the present invention may also contain a viscosity modifier with the goal of adjusting the rheological characteristics during printing. There are no particular limitations on the viscosity modifier, and commercially available viscosity modifiers can be used that contain an inorganic compound such as silica, bentonite, or calcium carbonate, or that contain an organic compound such as hydrogenated castor oil types, amide types, polyolefin types, polymerized vegetable oil types, and surfactant types. A single one of these viscosity modifiers may be used by itself or two or more may be used in combination.

It is known that an improvement in the stringiness that is a cause of printing defects can be obtained through the judicious use of a viscosity modifier as above. The use of an appropriate viscosity modifier is preferred in order to appropriately realize the effects of the present invention.

The high-concentration inorganic microparticle dispersion of the present invention may also contain, within a range in which its properties and the objects of the present invention are not impaired, other substances, for example, surfactants, leveling agents, flame retardants, plasticizers, adhesion promoters, colorants, static inhibitors, oxidation inhibitors, photostabilizers, release agents, and coupling agents.

### 3. Production of the high-concentration inorganic microparticle dispersion

The high-concentration inorganic microparticle dispersion of the present invention can be produced by mixing and kneading the inorganic microparticles, resin binder, organic solvent, dispersing agent, viscosity modifier, and other necessary components. The kneading step can be carried out by the usual methods. The kneading apparatus can be exemplified by Henschel mixers, ribbon mixers, Nauta mixers, paddle mixers, high-speed flow mixers, paint shakers, roll mills, ball mills, attritors, sand mills, and bead mills.

There are no particular limitations on the applications of the high-concentration inorganic microparticle dispersion of the present invention, and it can be advantageously used for printing patterns, e.g., prescribed interconnects, electrodes, resistive elements, capacitors, coils, and so forth, or for the application of a coating with the goal of imparting specific functionalities to an electronic component, in the production of electronic components such as electronic circuits, electrodes, photovoltaic cell panels, microstrip antennas, capacitors, inductors, layered ceramic capacitors, and plasma display panels.

### [Example]

The present invention is specifically described below using examples. The present invention is in no way limited to or by these examples. Unless specifically indicated otherwise, "%" and "parts" in the examples indicate "weight%" and "weight parts".

### Example 1

100 parts of 2,2,4-trimethyl-1,3-pentanediol monoisobutyrate (KYOWANOL M from KH Neochem Co., Ltd.) was introduced into a 1-L reaction vessel equipped with a stirring apparatus, thermometer, reflux condenser, and nitrogen gas introduction port; the temperature was raised to 95°C while introducing nitrogen gas; and 100 parts of a mixture of methyl methacrylate (ACRYESTER M from Mitsubishi Rayon Co., Ltd.) and the polymerization initiator LUPEROX 219 (3,5,5-trimethylhexanoyl peroxide from ARKEMA Yoshitomi, Ltd.) was then dripped in at a constant rate over 75 minutes from a dripping apparatus. After heating and stirring for an additional 4 hours, cooling was carried out to room temperature and the polymerization was ended. After the end of the polymerization, the solids fraction was adjusted to 40% with 2,2,4-trimethyl-1,3-pentanediol monoisobutyrate to obtain a (meth)acrylic resin [A-1]. The weight-average molecular weight of the synthesized acrylic copolymer, as polystyrene measured by gel permeation chromatography, was 15,000.

### Example 2

100 parts of 2,2,4-trimethyl-1,3-pentanediol monoisobutyrate (KYOWANOL M from KH Neochem Co., Ltd.) was introduced into a 1-L reaction vessel equipped with a stirring apparatus, thermometer, reflux condenser, and nitrogen gas introduction port; the temperature was raised to 155°C while introducing nitrogen gas; and 200 parts of a mixture of n-butyl methacrylate (ACRYESTER B from Mitsubishi Rayon Co., Ltd.) and the polymerization initiator LUPEROX DTA (di-tert-amyl peroxide from ARKEMA Yoshitomi, Ltd.) was then dripped in at a constant rate over 90 minutes from a dripping apparatus. After heating and stirring for an additional 4 hours, cooling was carried out to room temperature and the polymerization was ended. After the end of the polymerization, the solids fraction was adjusted to 50% with 2,2,4-trimethyl-1,3-pentanediol monoisobutyrate to obtain a (meth)acrylic resin [A-2]. The weight-average molecular weight of the synthesized acrylic copolymer, as polystyrene measured by gel permeation chromatography, was 8,000.

### Example 3

100 parts of 2,2,4-trimethyl-1,3-pentanediol monoisobutyrate (KYOWANOL M from KH Neochem Co., Ltd.) was introduced into a 1-L reaction vessel equipped with a stirring apparatus, thermometer, reflux condenser, and nitrogen gas introduction port; the temperature was raised to 155°C while introducing nitrogen gas; and 200 parts of a mixture of i-butyl methacrylate (ACRYESTER IB from Mitsubishi Rayon Co., Ltd.) and the polymerization initiator LUPEROX DTA (ARKEMA Yoshitomi, Ltd.) was then dripped in at a constant rate over 90 minutes from a dripping apparatus. After heating and stirring for an additional 4 hours, cooling was carried out to room temperature and the polymerization was ended. After the end of the polymerization, the solids fraction was adjusted to 50% with 2,2,4-trimethyl-1,3-pentanediol monoisobutyrate to obtain a (meth)acrylic resin [A-3]. The weight-average molecular weight of the synthesized acrylic copolymer, as polystyrene measured by gel permeation chromatography, was 7,500.

### Example 4

100 parts of 2,2,4-trimethyl-1,3-pentanediol monoisobutyrate (KYOWANOL M from KH Neochem Co., Ltd.) was introduced into a 1-L reaction vessel equipped with a stirring apparatus, thermometer, reflux condenser, and nitrogen gas introduction port; the temperature was raised to 155°C while introducing nitrogen gas; and 200 parts of a mixture of 2-ethylhexyl methacrylate (ACRYESTER EH from Mitsubishi Rayon Co., Ltd.) and the polymerization initiator LUPEROX DTA (ARKEMA Yoshitomi, Ltd.) was then dripped in at a constant rate over 90 minutes from a dripping apparatus. After heating and stirring for an additional 4 hours, cooling was carried out to room temperature and the polymerization was ended. After the end of the polymerization, the solids fraction was adjusted to 50% with 2,2,4-trimethyl-1,3-pentanediol monoisobutyrate to obtain a (meth)acrylic resin [A-4]. The weight-average molecular weight of the synthesized acrylic copolymer, as polystyrene measured by gel permeation chromatography, was 6,000.

### Example 5

30 parts of 2,2,4-trimethyl-1,3-pentanediol monoisobutyrate (KYOWANOL M from KH Neochem Co., Ltd.) was introduced into a 1-L reaction vessel equipped with a stirring apparatus, thermometer, reflux condenser, and nitrogen gas introduction port; the temperature was raised to 135°C while introducing nitrogen gas; and 70 parts of a mixture of lauryl methacrylate (ACRYESTER L from Mitsubishi Rayon Co., Ltd.) and the polymerization initiator LUPEROX 570 (tert-amyl-3,5,5-trimethylhexane peroxoate from ARKEMA Yoshitomi, Ltd.) was then dripped in at a constant rate over 90 minutes from a dripping apparatus. After heating and stirring for an additional 4 hours, cooling was carried out to room temperature and the polymerization was ended. After the end of the polymerization, the solids fraction was adjusted to 50% with 2,2,4-trimethyl-1,3-pentanediol monoisobutyrate to obtain a (meth)acrylic resin [A-5]. The weight-average molecular weight of the synthesized acrylic copolymer, as polystyrene measured by gel permeation chromatography, was 9,500.

### Example 6

30 parts of 2,2,4-trimethyl-1,3-pentanediol monoisobutyrate (KYOWANOL M from KH Neochem Co., Ltd.) was introduced into a 1-L reaction vessel equipped with a stirring apparatus, thermometer, reflux condenser, and nitrogen gas introduction port; the temperature was raised to 155°C while introducing nitrogen gas; and 70 parts of a mixture of isobutyl acrylate (IBA from Mitsubishi Chemical Corporation) and the polymerization initiator LUPEROX 570 (ARKEMA Yoshitomi, Ltd.) was then dripped in at a constant rate over 90 minutes from a dripping apparatus. After heating and stirring for an additional 4 hours, cooling was carried out to room temperature and the polymerization was ended. After the end of the polymerization, the solids fraction was adjusted to 50% with 2,2,4-trimethyl-1,3-pentanediol monoisobutyrate to obtain a (meth)acrylic resin [A-6]. The weight-average molecular weight of the synthesized acrylic copolymer, as polystyrene measured by gel permeation chromatography, was 14,000.

### Example 7

30 parts of 2,2,4-trimethyl-1,3-pentanediol monoisobutyrate (KYOWANOL M from KH Neochem Co., Ltd.) was introduced into a 1-L reaction vessel equipped with a stirring apparatus, thermometer, reflux condenser, and nitrogen gas introduction port; the temperature was raised to 155°C while introducing nitrogen gas; and 70 parts of a mixture of 2-ethylhexyl acrylate (HA from Mitsubishi Chemical Corporation) and the polymerization initiator LUPEROX 570 (ARKEMA Yoshitomi, Ltd.) was then dripped in at a constant rate over 90 minutes from a dripping apparatus. After heating and stirring for an additional 4 hours, cooling was carried out to room temperature and the polymerization was ended. After the end of the polymerization, the solids fraction was adjusted to 50% with 2,2,4-trimethyl-1,3-pentanediol monoisobutyrate to obtain a (meth)acrylic resin [A-7]. The weight-average molecular weight of the synthesized acrylic copolymer, as polystyrene measured by gel permeation chromatography, was 10,000.

### Example 8

100 parts of butyl carbitol (BDG from Nippon Nyukazai Co., Ltd.) was introduced into a 1-L reaction vessel equipped with a stirring apparatus, thermometer, reflux condenser, and nitrogen gas introduction port; the temperature was raised to 155°C while introducing nitrogen gas; and 200 parts of a mixture of hydroxyethyl methacrylate (ACRYESTER HO from Mitsubishi Rayon Co., Ltd.) and the polymerization initiator LUPEROX DTA (ARKEMA Yoshitomi, Ltd.) was then dripped in at a constant rate over 90 minutes from a dripping apparatus. After heating and stirring for an additional 4 hours, cooling was carried out to room temperature and the polymerization was ended. After the end of the polymerization, the solids fraction was adjusted to 50% with 2,2,4-trimethyl-1,3-pentanediol monoisobutyrate to obtain a (meth)acrylic resin [A-8]. The weight-average molecular weight of the synthesized acrylic copolymer, as polystyrene measured by gel permeation chromatography, was 2,000.

### Example 9

30 parts of 2,2,4-trimethyl-1,3-pentanediol monoisobutyrate (KYOWANOL M from KH Neochem Co., Ltd.) was introduced into a 1-L reaction vessel equipped with a stirring apparatus, thermometer, reflux condenser, and nitrogen gas introduction port; the temperature was raised to 155°C while introducing nitrogen gas; and 70 parts of a mixture of i-butyl methacrylate (ACRYESTER IB from Mitsubishi Rayon Co., Ltd.), a methoxy polyethylene glycol acrylate having a molecular weight of 400 for the polyethylene glycol segment (AM-90G from Shin-Nakamura Chemical Co., Ltd.), and the polymerization initiator LUPEROX 570 (ARKEMA Yoshitomi, Ltd.) was then dripped in at a constant rate over 90 minutes from a dripping apparatus. After heating and stirring for an additional 4 hours, cooling was carried out to room temperature and the polymerization was ended. After the end of the polymerization, the solids fraction was adjusted to 50% with 2,2,4-trimethyl-1,3-pentanediol monoisobutyrate to obtain a (meth)acrylic resin [A-9]. The weight-average molecular weight of the synthesized acrylic copolymer, as polystyrene measured by gel permeation chromatography, was 20,000.

### Example 10

30 parts of 2,2,4-trimethyl-1,3-pentanediol monoisobutyrate (KYOWANOL M from KH Neochem Co., Ltd.) was introduced into a 1-L reaction vessel equipped with a stirring apparatus, thermometer, reflux condenser, and nitrogen gas introduction port; the temperature was raised to 155°C while introducing nitrogen gas; and 70 parts of a mixture of i-butyl methacrylate (ACRYESTER IB from Mitsubishi Rayon Co., Ltd.) and the polymerization initiator LUPEROX DTA (ARKEMA Yoshitomi, Ltd.) was then dripped in at a constant rate over 90 minutes from a dripping apparatus. After heating and stirring for an additional 4 hours, cooling was carried out to room temperature and the polymerization was ended. After the end of the polymerization, the solids fraction was adjusted to 50% with 2,2,4-trimethyl-1,3-pentanediol monoisobutyrate to obtain a (meth)acrylic resin [A-10]. The weight-average molecular weight of the synthesized acrylic copolymer, as polystyrene measured by gel permeation chromatography, was 2,000.

### Example 11

100 parts of 2,2,4-trimethyl-1,3-pentanediol monoisobutyrate (KYOWANOL M from KH Neochem Co., Ltd.) was introduced into a 1-L reaction vessel equipped with a stirring apparatus, thermometer, reflux condenser, and nitrogen gas introduction port; the temperature was raised to 135°C while introducing nitrogen gas; and 200 parts of a mixture of i-butyl methacrylate (ACRYESTER IB from Mitsubishi Rayon Co., Ltd.) and the polymerization initiator LUPEROX 570 (ARKEMA Yoshitomi, Ltd.) was then dripped in at a constant rate over 90 minutes from a dripping apparatus. After heating and stirring for an additional 4 hours, cooling was carried out to room temperature and the polymerization was ended. After the end of the polymerization, the solids fraction was adjusted to 50% with 2,2,4-trimethyl-1,3-pentanediol monoisobutyrate to obtain a (meth)acrylic resin [A-11]. The weight-average molecular weight of the synthesized acrylic copolymer, as polystyrene measured by gel permeation chromatography, was 21,000.

### Example 12

150 parts of a mixture of i-butyl methacrylate (ACRYESTER IB from Mitsubishi Rayon Co., Ltd.) and the polymerization initiator V59 (2,2-azobis(2-methylbutyronitrile) from Wako Pure Chemical Industries, Ltd.) was introduced into a 1-L reaction vessel equipped with a stirring apparatus, thermometer, reflux condenser, and nitrogen gas introduction port; the temperature was raised to 80°C while introducing nitrogen gas; heating and stirring were carried out for an additional 4 hours; and cooling was then carried out to room temperature and the polymerization was ended. After the end of the polymerization, the solids fraction was adjusted to 40% with 2,2,4-trimethyl-1,3-pentanediol monoisobutyrate (KYOWANOL M from KH Neochem Co., Ltd.) to obtain a (meth)acrylic resin [A-12]. The weight-average molecular weight of the synthesized acrylic copolymer, as polystyrene measured by gel permeation chromatography, was 50,000.

### Example 13

150 parts of a mixture of i-butyl methacrylate (ACRYESTER IB from Mitsubishi Rayon Co., Ltd.) and the polymerization initiator V65 (2,2'-azobis(2,4-dimethylvaleronitrile) from Wako Pure Chemical Industries, Ltd.) was introduced into a 1-L reaction vessel equipped with a stirring apparatus, thermometer, reflux condenser, and nitrogen gas introduction port; the temperature was raised to 70°C while introducing nitrogen gas; heating and stirring were carried out for an additional 4 hours; and cooling was then carried out to room temperature and the polymerization was ended. After the end of the polymerization, the solids fraction was adjusted to 40% with 2,2,4-trimethyl-1,3-pentanediol monoisobutyrate (KYOWANOL M from KH Neochem Co., Ltd.) to obtain a (meth)acrylic resin [A-13]. The weight-average molecular weight of the synthesized acrylic copolymer, as polystyrene measured by gel permeation chromatography, was 170,000.

### Example 14

150 parts of a mixture of i-butyl methacrylate (ACRYESTER IB from Mitsubishi Rayon Co., Ltd.) and the polymerization initiator V65 (Wako Pure Chemical Industries, Ltd.) was introduced into a 1-L reaction vessel equipped with a stirring apparatus, thermometer, reflux condenser, and nitrogen gas introduction port; the temperature was raised to 70°C while introducing nitrogen gas; heating and stirring were carried out for an additional 4 hours; and cooling was then carried out to room temperature and the polymerization was ended. After the end of the polymerization, the solids fraction was adjusted to 30% with 2,2,4-trimethyl-1,3-pentanediol monoisobutyrate (KYOWANOL M from KH Neochem Co., Ltd.) to obtain a (meth)acrylic resin [A-14]. The weight-average molecular weight of the synthesized acrylic copolymer, as polystyrene measured by gel permeation chromatography, was 240,000.

### Comparative Examples

The ethyl cellulose resins STD-4 (The Dow Chemical Company) (R-1) and STD-100 (The Dow Chemical Company) (R-2), which are in general use as resin binders, were used as comparative examples.

### Test Example 1

A solution of the readily thermally degradable resin was prepared by mixing a (meth)acrylic resin from Examples 1 to 9 with a 2,2,4-trimethyl-1,3-pentanediol monoisobutyrate solution of an ethyl cellulose resin (STD-4 or STD-100 from The Dow Chemical Company) so as to provide a weight ratio between (meth)acrylic resin and ethyl cellulose resin solids fraction of 20 : 80. This readily thermally degradable resin solution was coated on a glass plate with a 4-mil applicator followed by drying to obtain a dry film of the readily thermally degradable resin. The results of inspection of the appearance of the dry film are given in Table 1.

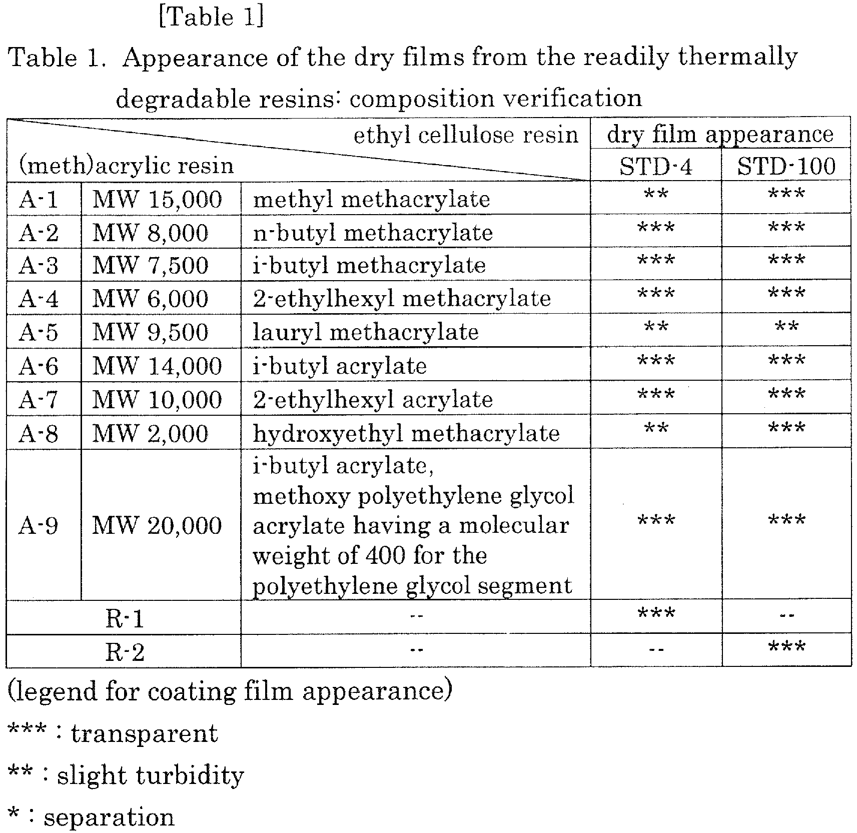

Based on the test results in Table 1, the conclusion can be drawn that the range for R² in (meth)acrylic resin with general formula (1) that is compatible with ethyl cellulose is a C₁-₁₂ straight-chain hydrocarbon group, branched-chain hydrocarbon group or hydroxyl group-bearing hydrocarbon, or a polyalkylene oxide-containing group.

### Test Example 2

Using a TG/DTA instrument (DTG-60A (from Shimadzu Corporation)), thermal degradability tests were carried out on the dry films produced in Test Example 1, using an aluminum cell under a nitrogen atmosphere at a temperature ramp rate of 10°C/minute, and the temperature at which the weight was reduced by at least 95% was taken to be the degradation temperature. The carbon residue remaining after the measurement was also rated. The results of the tests are given in Table 2.

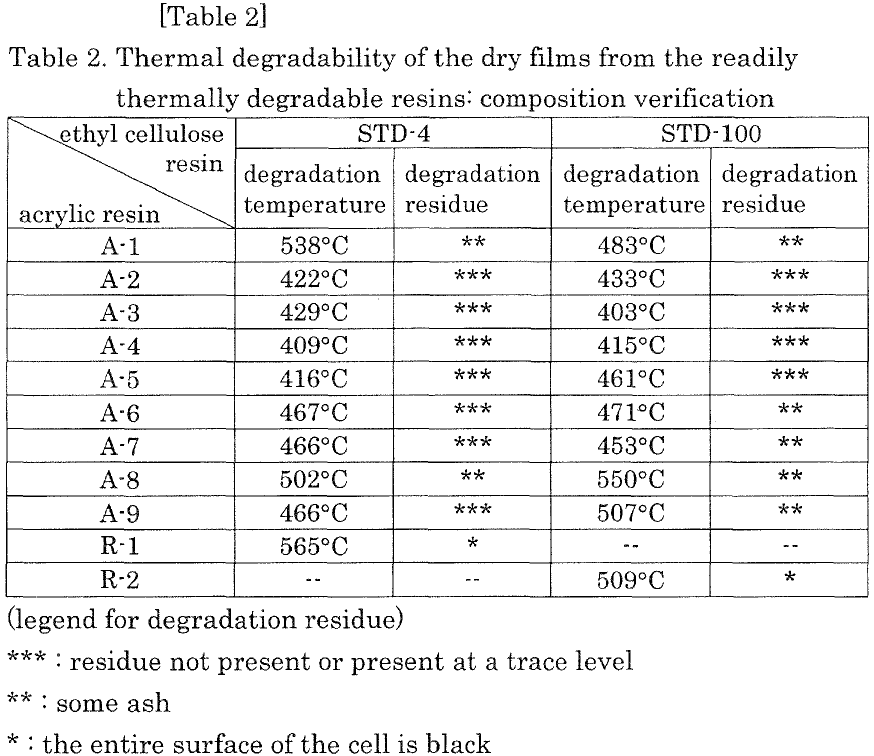

The test results in Table 2 show that the readily thermally degradable resin according to the present invention has a better thermal degradability than ethyl cellulose resin and is superior for firing applications.

### Test Example 3

A solution of the readily thermally degradable resin was prepared by mixing a 2,2,4-trimethyl-1,3-pentanediol monoisobutyrate solution of an ethyl cellulose resin (STD-4 or STD-100 from The Dow Chemical Company) with a methacrylic resin from Examples 10 to 14 so as to provide a weight ratio between (meth)acrylic resin and ethyl cellulose resin solids fraction of 20 : 80. This readily thermally degradable resin solution was coated on a glass plate with a 4-mil applicator followed by drying to obtain a dry film of the readily thermally degradable resin. The results of inspection of the appearance of the dry films are given in Table 3.

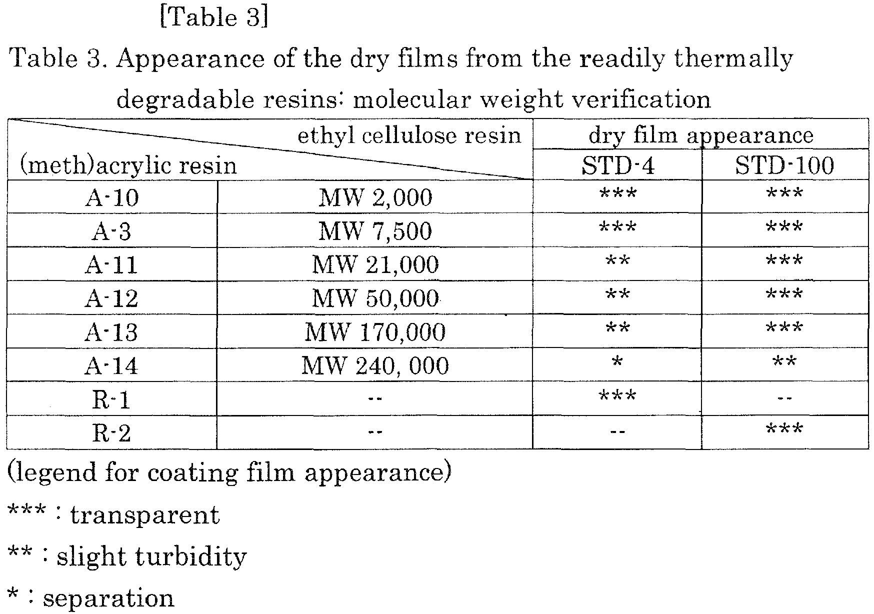

Based on the test results in Table 3, it can be understood that the weight-average molecular weight of (meth)acrylic resin that can form the readily thermally degradable resin according to the present invention desirably does not exceed 200,000 considered in terms of the appearance of the dry film.

### Test Example 4

Using a TG/DTA instrument (DTG-60A (from Shimadzu Corporation)), thermal degradability tests were carried out on the dry films produced in Test Example 3, using an aluminum cell under a nitrogen atmosphere at a temperature ramp rate of 10°C/minute, and the temperature at which the weight was reduced by at least 95% was taken to be the degradation temperature. The carbon residue remaining after the measurement was also rated. The results of the tests are given in Table 4.

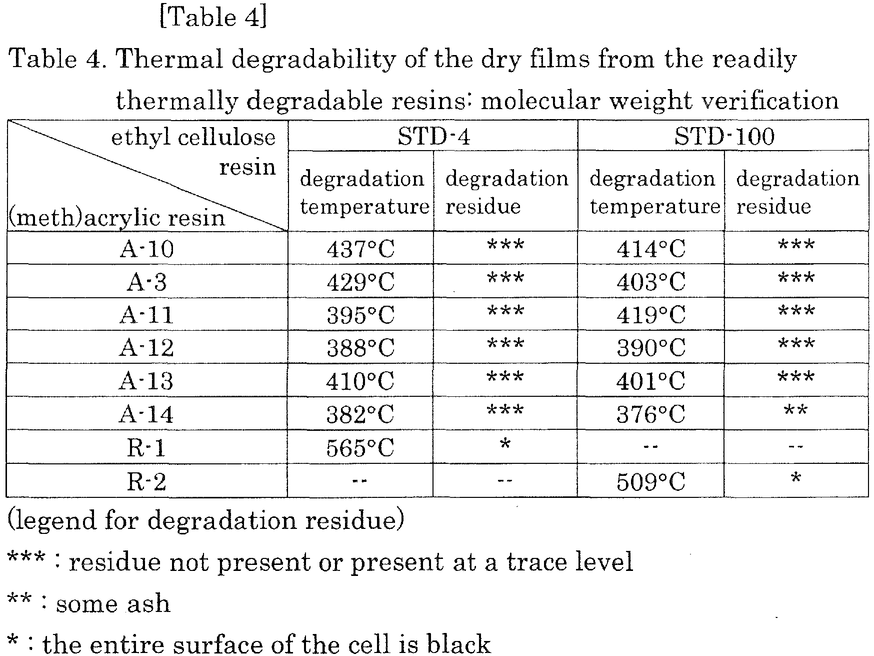

The test results in Table 4 show that the readily thermally degradable resins prepared in Test Example 3 have a better thermal degradability than ethyl cellulose resin and are superior for firing applications.

### Test Example 5

Solutions of the readily thermally degradable resins were prepared by mixing a 2,2,4-trimethyl-1,3-pentanediol monoisobutyrate solution of an ethyl cellulose resin (STD-4 or STD-100 from The Dow Chemical Company) with the methacrylic resin from Example 3 so as to provide a weight ratio between methacrylic resin and ethyl cellulose resin solids fraction of 5 : 95, 20 : 80, and 50 : 50. The readily thermally degradable resin solutions were coated on glass plates with a 4-mil applicator followed by drying to obtain dry films of the readily thermally degradable resins. The results of inspection of the appearance of the dry films are given in Table 5.

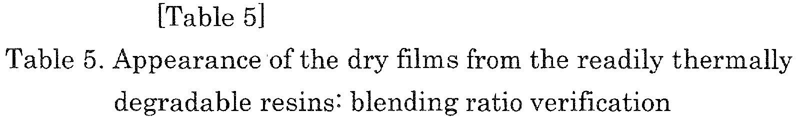

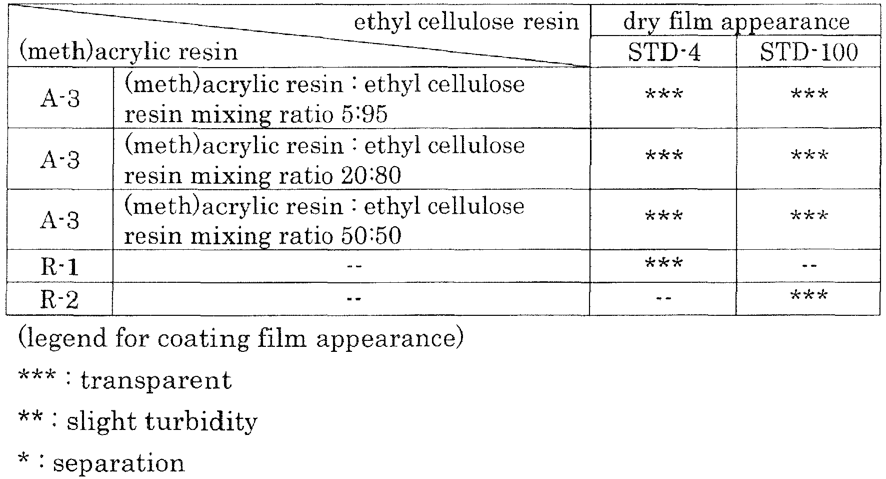

Based on the test results in Table 5, it can be understood that suitable mixing ratios for the (meth)acrylic resin and ethyl cellulose resin used in the readily thermally degradable resin according to the present invention are ratios (weight ratio) of 5 : 95 to 50 : 50.

### Test Example 6

Using a TG/DTA instrument (DTG-60A (from Shimadzu Corporation)), thermal degradability tests were carried out on the dry films produced in Test Example 5, using an aluminum cell under a nitrogen atmosphere at a temperature ramp rate of 10°C/minute, and the temperature at which the weight was reduced by at least 95% was taken to be the degradation temperature. The carbon residue remaining after the measurement was also rated. The results of the tests are given in Table 6.

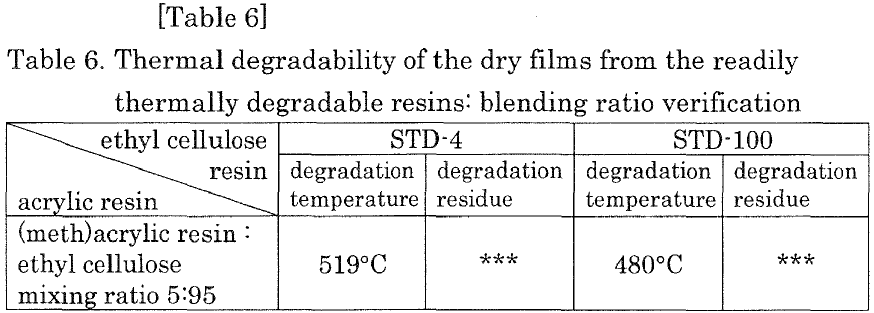

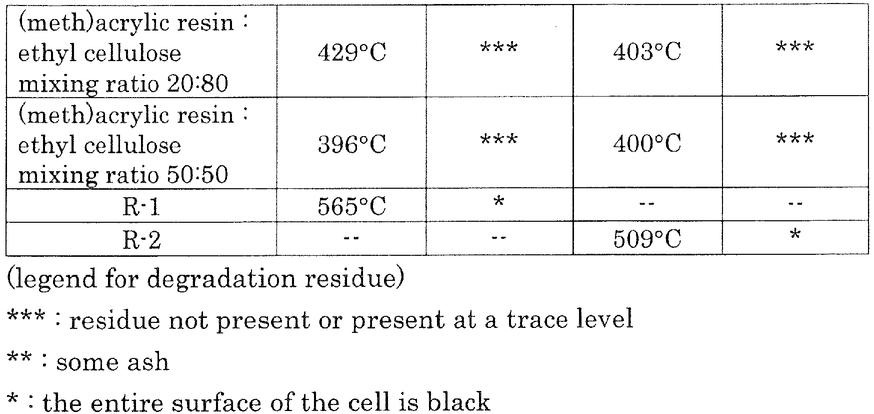

The test results in Table 6 show that the readily thermally degradable resins prepared in Test Example 5 have a better thermal degradability than ethyl cellulose resin and are superior for applications that require a firing step.

### Test Example 7

A silver micropowder (particle diameter = 3 µm), glass powder (particle diameter = 2 µm), a solution of the readily thermally degradable resin as prepared in Test Example 1 or Test Example 2, solvent (KYOWANOL M from KH Neochem Co., Ltd.), and a dispersing agent (HIPLAAD ED 119 from Kusumoto Chemicals, Ltd.) were mixed and a high-concentration silver microparticle dispersion with the composition shown in Table 7 was obtained by dispersion using a roll mill.

### [Table 7]

**Table 7. Composition of the high-concentration silver micropowder dispersion**

| starting materials | amount blended (parts) |
|---|---|
| silver micropowder | 90.0 |
| glass powder | 1.5 |
| readily thermally degradable resin | 4.5 |
| solvent | 3.1 |
| dispersing agent | 0.9 |

The viscosity of the high-concentration silver micropowder dispersion was measured at 25°C using an E-type viscometer and a 3° x R9.7 mm cone rotor. The T. I. (thixotropic index) value represents the ratio, for measurement at 25°C, of the viscosity at a shear rate of 0.4 [1/sec.] with the viscosity at a shear rate of 4 [1/sec.], i.e., viscosity at a shear rate of 0.4 [1/sec.]/viscosity at a shear rate of 4 [1/sec.]. The viscosity and the T. I. value of the high-concentration silver micropowder dispersions are given in Table 8.

Fine lines were printed on a ceramic substrate from the obtained high-concentration silver micropowder dispersion by a screen printing method using a #640 mesh screen having a line width of 50 µm, and the characteristics of the high-concentration silver micropowder dispersions were evaluated by measuring the printed line width and printed line height and observing the state of the printing. The results of the evaluations are given in Table 8.

### [Table 8]

**Table 8. Test results for the high-concentration silver micropowder dispersions**

| readily thermally degradable resin or comparative example | Viscosity Pa·s | T. I. value | printed line width µm | printed line height µm | state of the printing |
|---|---|---|---|---|---|
| A-2 | 85 | 4.3 | 65 | 9.9 | excellent |
| A-3 | 81 | 4.5 | 57 | 10.0 | excellent |
| A-4 | 89 | 4.7 | 65 | 10.3 | excellent |
| A-7 | 74 | 4.4 | 65 | 10.2 | excellent |
| A-11 | 88 | 4.7 | 62 | 10.0 | excellent |
| A-12 | 88 | 4.7 | 58 | 9.8 | excellent |
| R-1 | 108 | 4.2 | 70 | 9.8 | missing portions are present in the lines |

As is clear from the test results in Table 8, the high-concentration silver micropowder dispersions that use the readily thermally degradable resin binder of the present invention exhibit a viscosity-modification effect better adapted to screen printing than for the use of ethyl cellulose resin as the binder and provide an excellent printed state.

### [Industrial Applicability]

The firing behavior and printing characteristics are improved when the high-concentration inorganic microparticle dispersion of the invention is used in the printing of patterns, e.g., prescribed interconnects, electrodes, resistive elements, capacitors, coils, and so forth, in the production of electronic components (for example, electronic circuits, electrodes, photovoltaic cell panels, microstrip antennas, capacitors, inductors, layered ceramic capacitors, plasma display panels, and so forth). As a consequence, the present invention can be expected to contribute to enhancing the electronic component properties still further, to facilitating the mass production of electronic components, and to saving energy in the production process.

## Claims

1. A readily thermally degradable organic resin binder comprising a (meth)acrylic resin and an ethyl cellulose resin, the weight ratio between (meth)acrylic resin and ethyl cellulose resin being 5 : 95 to 50 : 50, wherein
the (meth)acrylic resin is a (meth)acrylic polymer that has a weight-average molecular weight of 1,000 to 250,000, as polystyrene measured by gel permeation chromatography, and has a monomer unit given by the following general formula (1) 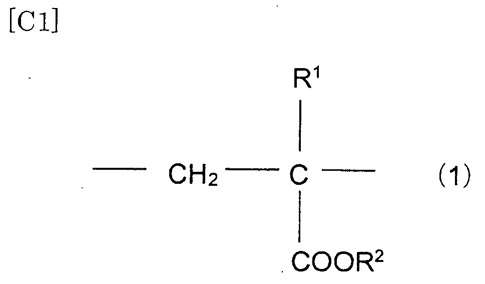 [in the formula, R¹ represents hydrogen or a methyl group and R² represents hydrogen or a C₁-₂ straight-chain hydrocarbon group, branched-chain hydrocarbon group or hydroxyl group-bearing hydrocarbon group, or a polyalkylene oxide-containing group].

2. The readily thermally degradable organic resin binder according to claim 1, wherein, in general formula (1), R¹ is hydrogen or a methyl group and R² is a C₁-₄ alkyl group, a 2-ethylhexyl group, a lauryl group, a hydroxyethyl group, or a methoxy polyethylene glycol group.

3. The readily thermally degradable organic resin binder according to claim 1, wherein the (meth)acrylic resin has a weight-average molecular weight of 2,000 to 200,000, as polystyrene measured by gel permeation chromatography.

4. A high-concentration inorganic microparticle dispersion comprising, as essential components, inorganic microparticles and the readily thermally degradable organic resin binder according to claim 1, and optionally comprising an organic solvent or an additive, wherein said dispersion contains 30 to 95 weight%, based on the total weight of the dispersion, of inorganic microparticles.

5. The high-concentration inorganic microparticle dispersion according to claim 4, wherein the inorganic microparticles are silver microparticles.

6. A functional paste composition comprising the readily thermally degradable organic resin binder according to claim 1, and providing excellent screen printing characteristics in a pattern forming process.

## Patentansprüche

1. Leicht thermisch zersetzbares organisches Harzbindemittel, das ein (Meth)acrylharz und ein Ethylcelluloseharz umfasst, wobei das Gewichtsverhältnis zwischen (Meth)acrylharz und Ethylcelluloseharz 5:95 bis 50:50 ist, wobei
das (Meth)acrylharz ein (Meth)acrylpolymer ist, das ein gewichtsmittleres Molekulargewicht von 1.000 bis 250.000, als Polystyrol, gemessen durch Gelpermeationschromatographie, hat und eine Monomereinheit hat, die durch die folgende allgemeine Formel (1) angegeben wird 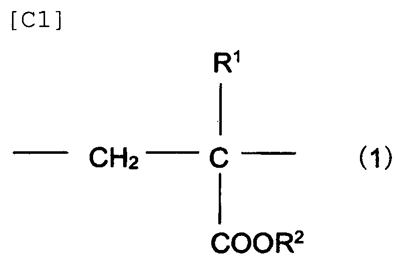 [in der Formel stellt R¹ Wasserstoff oder eine Ethylgruppe dar und stellt R² Wasserstoff oder eine geradkettige C₁₋₁₂-Kohlenwasserstoffgruppe, verzweigte Kohlenwasserstoffgruppe oder Hydroxylgruppe-tragende Kohlenwasserstoffgruppe oder eine Polyalkylenoxid-enthaltende Gruppe dar].

2. Leicht thermisch zersetzbares organisches Harzbindemittel gemäß Anspruch 1, wobei in der allgemeinen Formel (1) R¹ Wasserstoff oder eine Methylgruppe ist und R² eine C₁₋₄-Alkylgruppe, eine 2-Ethylhexylgruppe, eine Laurylgruppe, eine Hydroxyethylgruppe oder eine Methoxypolyethylenglycolgruppe ist.

3. Leicht thermisch abbaubares organisches Harzbindemittel gemäß Anspruch 1, wobei das (Meth)acrylharz ein gewichtsmittleres Molekulargewicht von 2.000 bis 200.000, als Polystyrol, gemessen durch Gelpermeationschromatographie, hat.

4. Anorganische Mikropartikeldispersion hoher Konzentration, die, als wesentliche Komponenten, anorganische Mikropartikel und das leicht thermisch abbaubare organische Harzbindemittel gemäß Anspruch 1 umfasst und gegebenenfalls ein organisches Lösungsmittel oder ein Additiv umfasst, wobei die Dispersion 30 bis 95 Gew.-%, bezogen auf das Gesamtgewicht der Dispersion, anorganische Mikropartikel enthält.

5. Anorganische Mikropartikeldispersion hoher Konzentration gemäß Anspruch 4, wobei die anorganischen Mikropartikel Silbermikropartikel sind.

6. Funktionelle Pastenzusammensetzung, die das leicht thermisch abbaubare organische Harzbindemittel gemäß Anspruch 1 umfasst und ausgezeichnete Siebdruckcharakteristika in einem Musterbildungsverfahren bereitstellt.

## Revendications

1. Un liant à base de résine organique aisément thermo-dégradable, comprenant une résine (méth-)acrylique et une résine éthyl-cellulosique, le rapport pondéral résine (méth-)acrylique/résine éthyl-cellulosique étant de 5/95 à 50/50, dans lequel liant la résine (méth-)acrylique consiste en un polymère (méth-)acrylique qui présente une masse moléculaire moyenne pondérale de 1.000 à 250.000, mesurée en tant que polystyrène par chromatographie par perméation de gel, et comporte un fragment polymère présentant la formule générale suivante (1): 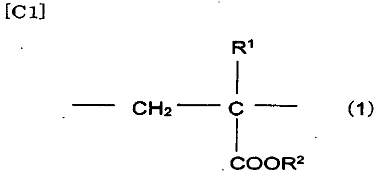 [dans la formule, R¹ représente un atome d'hydrogène ou un groupe méthyle et R² représente un atome d'hydrogène ou un groupe hydrocarboné en C₁₋₁₂ à chaîne linéaire, un groupe hydrocarboné à chaîne ramifiée ou un groupe hydrocarboné portant un groupe hydroxyle ou un groupe contenant de l'oxyde de polyalkylène].

2. Le liant à base de résine organique aisément thermo dégradable selon la revendication 1, dans lequel, dans la formule générale (1),
- R¹ est un atome d'hydrogène ou un groupe méthyle et
- R² est un groupe alkyle en C₁₋₄, un groupe 2-éthylhexyle, un groupe lauryle, un groupe hydroxy-éthyle ou un groupe méthoxy-polyéthylène glycol.

3. Le liant à base de résine organique aisément thermo dégradable selon la revendication 1, dans lequel la résine (méth-)acrylique présente une masse moléculaire moyenne pondérale de 2.000 à 200.000, mesurée en tant que polystyrène par chromatographie par perméation de gel.

4. Une dispersion de microparticules inorganiques à concentration élevée comprenant, comme composants essentiels, des microparticules inorganiques et le liant à base de résine organique aisément thermo-dégradable selon la revendication 1, et comprenant éventuellement un solvant organique ou un additif, laquelle dispersion contient de 30 à 95% en poids de microparticules inorganiques, exprimés par rapport au poids total de la dispersion.

5. La dispersion de microparticules inorganiques à concentration élevée selon la revendication 4, dans laquelle les microparticules inorganiques sont des microparticules d'argent.

6. Une composition de pâte fonctionnelle comprenant le liant organique à base de résine aisément thermo dégradable selon la revendication 1, et présentant dans un procédé de formation de motif d'excellentes caractéristiques de sérigraphie.
